# EUROPEAN PATENT APPLICATION

(11) **EP 4 113 650 A1**
(43) Date of publication of application: **04.01.2023**
(21) Application number: 21759806.9
(22) Date of filing: 09.02.2021
(51) Int. Cl.: H01M 4/13, H01M 4/36, H01M 4/38, H01M 4/62

(54) **NEGATIVE ELECTRODE FOR NONAQUEOUS-ELECTROLYTE SECONDARY BATTERY, AND NONAQUEOUS-ELECTROLYTE SECONDARY BATTERY**

(30) Priority: 28.02.2020 JP 2020034462
(71) Applicant: Panasonic Intellectual Property Management Co., Ltd., Osaka-shi, Osaka 540-6207 (JP)
(72) Inventor: SOGA, Masahiro, Osaka-shi, Osaka 540-6207 (JP); YAMAMOTO, Norihisa, Osaka-shi, Osaka 540-6207 (JP)
(74) Representative: Novagraaf International SA
(86) International application number: PCT/JP2021/004813
(87) International publication number: WO 2021/172005

(57) **Abstract**

A negative electrode for a nonaqueous electrolyte secondary battery includes a negative electrode mixture including a negative electrode active material capable of electrochemically storing and releasing lithium ions, a carbon nanotube, and an acrylic resin, wherein the negative electrode active material includes a silicon-containing material, and the carbon nanotube has an average diameter of 5 nm or less.

## Description

### [Technical Field]

The present disclosure relates to a negative electrode for a nonaqueous electrolyte secondary battery and a nonaqueous electrolyte secondary battery.

### [Background Art]

Nonaqueous electrolyte secondary batteries represented by lithium ion secondary batteries include a positive electrode, a negative electrode, and a nonaqueous electrolyte. The negative electrode includes a negative electrode mixture containing a negative electrode active material capable of electrochemically storing and releasing lithium ions. For the negative electrode active material, for example, a material containing silicon which stores a large amount of lithium ions is used.

Patent Literature 1 proposes a negative electrode for a lithium ion secondary battery including a negative electrode active material layer including a silicon-based active material and a carbon nanotube (CNT) having an average diameter of 10 nm or more and 120 nm or less and having an average length in a specific range, wherein a CNT content is in a specific range.

### [Citation List]

### [Patent Literature]

PLT1: Japanese Laid-Open Patent Publication No. 2016-110876

### [Summary of Invention]

A conductive path is formed between the silicon-based active material and the negative electrode active material surrounding the silicon-based active material through the CNT. However, the CNT described in Patent Literature 1 has a large average diameter of 10 nm or more, and has a high rigidity, and the CNT is insufficiently interposed between the silicon-based active material and the negative electrode active material surrounding the silicon-based active material, and therefore contact points may not be formed sufficiently between the CNT and the silicon-based active material and the negative electrode active material surrounding them. Also, because the CNT is hydrophobic, contact points may not be formed sufficiently between the CNT and the silicon-based active material. The insufficient formation of the above-described contact points may lead to insufficient formation of the conductive path, which may lead to insufficient improvements in cycle characteristics.

An aspect of the present disclosure relates to a negative electrode for a nonaqueous electrolyte secondary battery including a negative electrode mixture including a negative electrode active material capable of electrochemically storing and releasing lithium ions, a carbon nanotube, and an acrylic resin, wherein the negative electrode active material includes a silicon-containing material, and the carbon nanotube has an average diameter of 5 nm or less.

Another aspect of the present disclosure relates to a nonaqueous electrolyte secondary battery including a positive electrode, a negative electrode, and a nonaqueous electrolyte, wherein the negative electrode is the above-described negative electrode.

The present disclosure allows for improvement in cycle characteristics of nonaqueous electrolyte secondary batteries.

### [Brief Description of Drawings]

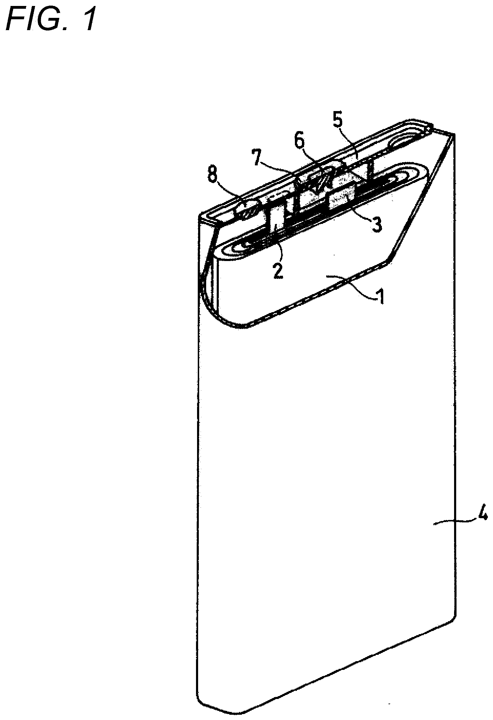

FIG. 1 is a partially cutaway schematic perspective view of a nonaqueous electrolyte secondary battery in an embodiment of the present disclosure.

### [Description of Embodiments]

### [Negative electrode for nonaqueous electrolyte secondary battery]

A negative electrode for a nonaqueous electrolyte secondary battery in an embodiment of the present disclosure includes a negative electrode mixture containing a negative electrode active material capable of electrochemically storing and releasing lithium ions, a carbon nanotube (hereinafter, also referred to as CNT), and an acrylic resin. The negative electrode active material includes a silicon-containing material (hereinafter, also referred to as Si-containing material). The CNT has an average diameter of 5 nm or less.

When the CNT has an average diameter of 5 nm or less, the rigidity of the CNT is lowered, and the CNT can be interposed sufficiently between the Si-containing material and the negative electrode active material surrounding them. Thus, the CNT easily forms contact points between the Si-containing material and the negative electrode active material surrounding them, and the conductive path (conductive network) is sufficiently formed between the Si-containing material and the negative electrode active material surrounding them through the CNT. Thus, cycle characteristics are improved.

Acrylic resin has an excellent binding capacity, and allows for strong and tight adhesion between the Si-containing material and the CNT surrounding the Si-containing material. Acrylic resin allows the contact points between the CNT and Si-containing material to be maintained strongly, and the conductive path is sufficiently secured. When the Si-containing material expands and contracts during charge/discharge, acrylic resin allows for tight adhesion between the CNT and the Si-containing material to be strongly maintained, and isolation of the Si-containing material (disconnection of conductive network) involved with the expansion and contraction is suppressed. Thus, cycle characteristics are improved.

When the negative electrode mixture contains the CNT with an average diameter of 5 nm or less and acrylic resin, the CNT easily forms contact points between the Si-containing material and the negative electrode active material surrounding them, and even with a small amount of CNT (e.g., CNT content of 0.1 mass% or less), the conductive path can be sufficiently formed. Thus, with a small amount of CNT, the negative electrode active material amount can be made large, which allows for a high capacity. Also, the CNT amount to be contained in the negative electrode slurry can be made small when producing the negative electrode. When the CNT amount in the negative electrode slurry is small, the CNT coagulation is suppressed, and reliability of a battery (negative electrode) to be obtained improves, and stable cycle characteristics are easily obtained.

In view of battery reliability and improvement in cycle characteristics, the CNT content relative to the negative electrode active material as a whole in the negative electrode mixture may be 0.1 mass% or less, may be 0.08 mass% or less, or may be 0.05 mass% or less. The lower limit of the CNT content may be 0.001 mass%, or may be 0.003 mass%. For example, the CNT content relative to the negative electrode active material as a whole in the negative electrode mixture is 0.001 mass% or more and 0.05 mass% or less. Furthermore, in view of battery reliability and further improvement in cycle characteristics, the CNT content relative to the negative electrode active material as a whole in the negative electrode mixture is preferably 0.005 mass% or more and 0.05 mass% or less, and more preferably 0.005 mass% or more and 0.02 mass% or less.

Preferably, the acrylic resin content relative to the negative electrode active material as a whole in the negative electrode mixture is 0.1 mass% or more and 1 mass% or less. When the acrylic resin content relative to the negative electrode active material as a whole in the negative electrode mixture is 0.1 mass% or more, the adherence between the CNT and the Si-containing material easily improves. When the acrylic resin content relative to the negative electrode active material as a whole in the negative electrode mixture is 1 mass% or less, the negative electrode resistance can be easily made small, and the negative electrode active material amount is sufficiently secured, and a high capacity is easily obtained.

In view of improvement in cycle characteristics, in the negative electrode mixture, the mass ratio of the acrylic resin to the CNT (hereinafter, also referred to as (acrylic resin/CNT)) is 0.2 or more and 500 or less. Preferably, the (acrylic resin/CNT) is 2 or more and 100 or less. In this case, the effects of improvements in adherence between the Si-containing material and CNT by the acrylic resin, and the effects of conductive path formation by the CNT can be easily obtained in good balance, and cycle characteristics further improve. Preferably, the (acrylic resin/CNT) is 20 or more and 100 or less.

### (Carbon nanotube)

CNT is a carbon material having a structure in which a sheet (graphene) of six-membered ring network formed by carbon atoms is rolled into a tube; and has a nano-size diameter and an excellent electrical conductivity. When the number of the layer of graphene forming the tube structure is one, it is referred to as a single-walled CNT (SWCNT). When the number of the above-described layer is a plural number, it is referred to as a multi-walled CNT (MWCNT).

In view of improvement in cycle characteristics, the CNT has an average diameter of, preferably 1 nm or more and 5 nm or less, more preferably 1 nm or more and 3 nm or less. When the CNT has an average diameter of 1 nm or more, the strength of the CNT is sufficiently secured, and the conductive path can be easily maintained by the CNT during charging and discharging.

The CNT having an average diameter of 5 nm or less may contain a large amount of SWCNT and a small amount of MWCNT. When the CNT has an average diameter of 5 nm or less, for example, 50% or more of the CNT is the SWCNT.
90% or more of the CNT may be the SWCNT. The SWCNT ratio to the CNT is a ratio of the number of SWCNTs to the numbers of the CNT as a whole.

The ratio of SWCNT to the CNT contained in the negative electrode mixture can be determined by the method below.

Using a scanning electron microscope (SEM), cross sections of the negative electrode mixture layer or images of the CNT are obtained. Using the SEM images, a plurality of (e.g., about 50 to 200) CNTs are randomly selected and observed, and the number of the SWCNTs is determined; and the ratio of the number of the SWCNTs to the total number of the selected CNTs is calculated.

In view of ensuring the conductive path between the Si-containing material and the negative electrode active material surrounding them, the CNT has an average length of preferably 1 µm or more and 100 µm or less, more preferably 5 µm or more and 20 µm or less.

The average length and average diameter of the CNT can be determined by obtaining cross sections of the negative electrode mixture layer or the CNT images by using an SEM and/or transmission electron microscope (TEM), selecting a plurality of (e.g., 50 to 200) CNTs randomly and measuring the length and the diameter using the images, and averaging them. The length of the CNT means the length of the CNT when the CNT is in a linear state.

The CNTs can be recognized by, for example, SEM images of the cross sections of the negative electrode mixture layer. Examples of the CNT analysis method include Raman spectroscopy and thermogravimetry.

### (Acrylic resin)

Acrylic resin is an acrylic binder having a carboxyl group, has a strong binding capacity, and works to firmly solidify the negative electrode mixture (layer) to enhance adherence between the negative electrode mixture layer and the negative electrode current collector.

Preferably, the acrylic resin includes a polymer including at least one selected from the group consisting of a (meth)acrylic acid unit and a (meth)acrylic acid salt unit. The acrylic resin may be a homopolymer or a copolymer. Preferably, in the copolymer, a total of the (meth)acrylic acid unit and the (meth)acrylic acid salt unit is, for example, 50 mol% or more, more preferably 80 mol% or more. In this specification, "(meth)acrylic acid" means at least one selected from the group consisting of "acrylic acid" and "methacrylic acid".

Preferably, the acrylic resin includes at least the (meth)acrylic acid salt unit, because the negative electrode slurry can be prepared easily, and it is advantageous in improving battery characteristics. In this case, examples of the (meth)acrylic acid salt include alkali metal salts such as lithium salt, sodium salt, etc., and ammonium salts.

Specific examples of the acrylic resin include copolymers having a repeating unit of polyacrylic acid, poly methacrylic acid, acrylic acid and/or methacrylic acid (acrylic acid-methacrylic acid copolymer, ethylene-acrylic acid copolymer, etc.), or salts thereof. A kind of the acrylic resin may be used singly, or two or more kinds thereof may be used in combination.

Preferably, the acrylic resin has a weight-average molecular weight of 3,000 or more and 10,000,000 or less. When the acrylic resin has a weight-average molecular weight in the above-described range, effects of improving cycle characteristics and effects of decreasing the internal resistance by the acrylic resin can be sufficiently obtained, and gelation (increase in viscosity) of the negative electrode slurry can be suppressed, which allows for easy production of negative electrodes.

### (Si-containing material)

Preferably, the Si-containing material contains a composite material in which silicon particles (fine Si phase) are dispersed in a lithium ion conductive phase (matrix). Preferably, the lithium ion conductive phase contains at least one selected from the group consisting of a SiO₂ phase, a silicate phase, and a carbon phase. The lithium ion conductive phase may form a noncrystalline phase. The composite material is advantageous in improving cycle characteristics because the lithium ion conductive phase relaxes the stresses caused by the expansion and contraction of the silicon particles during charging and discharging. The Si-containing material may include a composite material in which silicon particles are dispersed in the SiO₂ phase, a composite material in which silicon particles are dispersed in a silicate phase, a composite material in which silicon particles are dispersed in a carbon phase, and the like.

The SiO₂ phase is an amorphous phase containing 95 mass% or more silicon dioxide. The composite material in which silicon particles are dispersed in the SiO₂ phase is represented by SiOₓ, where x is, for example, 0.5 ≤ x < 2, and preferably 0.8 ≤ x ≤ 1.6. SiOₓ is obtained, for example, by heat-treating silicon monoxide and separating it into a SiO₂ phase and a fine Si phase by disproportionation. Observing the cross section of SiOₓ particles using transmission electron microscopy (TEM), the Si particles dispersed in the SiO₂ phase can be recognized.

Preferably, the silicate phase contains at least one of alkali metal elements (Group 1 elements other than hydrogen in a long period type periodic table) and Group 2 elements in a long period type periodic table. The alkali metal elements include lithium (Li), potassium (K), sodium (Na), and the like. The Group 2 elements include magnesium (Mg), calcium (Ca), strontium (Sr), barium (Ba), and the like. The lithium silicate phase may have a composition represented by a formula: Li_{2y}SiO_{2+y} (0 < y< 2). y may be 1/2 or 1. The composite material in which silicon particles are dispersed in a silicate phase can be obtained, for example, by pulverizing a mixture of silicate and a raw material silicon with stirring in a ball mill or the like to make fine particles, and then subjecting the mixture to heat treatment in an inert atmosphere.

The silicon particles dispersed in the silicate phase (before initial charge) may have an average particle size of 50 nm or more and 500 nm or less, or 100 nm or more and 400 nm or less. The average particle size of the silicon particles can be determined by averaging the maximum values of randomly selected 100 silicon particles using SEM images of cross sections of the composite material. The silicon particles dispersed in the silicate phase may be contained, relative to a total of the composite material, in an amount of 30 mass% or more and 95 mass% or less, 35 mass% or more and 75 mass% or less.

The carbon phase includes, for example, amorphous carbon which is less crystalline. The amorphous carbon may be, for example, graphitizable carbon (hard carbon) or non-graphitizable carbon (soft carbon). A composite material in which silicon particles are dispersed in a carbon phase can be obtained, for example, by pulverizing a mixture of a carbon source and a raw material silicon with stirring in a ball mill or the like to make fine particles, and then subjecting the mixture to heat treatment in an inert atmosphere. For example, a saccharide such as carboxy methylcellulose (CMC) or a water-soluble resin such as polyvinylpyrrolidone is used as the carbon source.

The composition of the Si-containing material can be determined by, for example, obtaining a reflected electron image of a cross section of the negative electrode mixture layer by field emission scanning electron microscopy (FE-SEM), observing particles of the Si-containing material, and performing elemental analysis on the observed Si-containing material particles. For the element analysis, for example, an electron probe micro analyzer (EPMA) analysis is used. The above-described analysis also allows for determination of the composition of the lithium ion conductive phase.

The Si-containing material may be, for example, a material in a particle state. The Si-containing material has an average particle size (D50) of, for example, 1 µm or more and 25 µm or less, preferably 4 µm or more and 15 µm or less. With the above-described range, excellent battery performance can be easily obtained. In this specification, the average particle size (D50) means a particle size (volume average particle size) having a volume integrated value of 50% in the particle size distribution measured by the laser diffraction scattering method. For example, "LA-750" manufactured by Horiba Corporation can be used as the measuring device.

When the lithium ion conductive phase is the SiO₂ phase or silicate phase, in view of improvement in electrical conductivity, at least a part of the surface of the Si-containing material particles may be covered with a conductive layer. The conductive layer contains a conductive material such as conductive carbon. The amount covered with the conductive layer is, for example, 1 part by mass or more and 10 parts by mass or less per 100 parts by mass of a total of the Si-containing material particles and the conductive layer. The Si-containing material particles having a conductive layer on its surface can be produced by, for example, mixing coal-pitch or the like with the Si-containing material particles, and then subjecting the mixture to heat treatment in an inert atmosphere.

### (Carbon material)

The negative electrode active material may further include a carbon material that electrochemically stores and releases lithium ions. The carbon material expands and contracts to a lesser degree during charging and discharging compared with the Si-containing material. By using the Si-containing material and the carbon material in combination, when repeating charge/discharge, the contact state between the negative electrode active material particles and also between the negative electrode mixture layer and the negative electrode current collector can be maintained more excellently. That is, while imparting the high capacity of the Si-containing material to the negative electrode, cycle characteristics can be improved. In view of a higher capacity and improvement in cycle characteristics, the ratio of the carbon material to a total of the Si-containing material and the carbon material is preferably 98 mass% or less, more preferably 70 mass% or more and 98 mass% or less, still more preferably 75 mass% or more and 95 mass% or less.

Examples of the carbon material used for the negative electrode active material include, for example, graphite, graphitizable carbon (soft carbon), and non-graphitizable carbon (hard carbon). A kind of carbon material may be used singly, or two or more kinds may be used in combination.

In particular, the carbon material is preferably graphite, because it has excellent charge/discharge stability, and has a small irreversible capacity. Examples of the graphite include natural graphite, artificial graphite, graphitized mesophase carbon particles, and the like. The graphite particles may partially include amorphous carbon, graphitizable carbon, or non-graphitizable carbon.

Graphite is a carbon material having a developed graphite-type crystal structure. The plane spacing d002 between the (002) planes of the graphite measured by X-ray diffractometry may be, for example, 0.340 nm or less, or 0.3354 nm or more and 0.340 nm or less. The crystallite size Lc (002) of the graphite may be, for example, 5 nm or more, or 5 nm or more and 200 nm or less. The crystallite size Lc (002) is measured by, for example, the Scherrer method. When the plane spacing d002 of the (002) planes and the crystallite size Lc (002) of the graphite fall within the above ranges, a high capacity can be easily obtained.

### [Nonaqueous electrolyte secondary battery]

The nonaqueous electrolyte secondary battery of an embodiment of the present disclosure includes a positive electrode, a negative electrode, and a nonaqueous electrolyte, and in the negative electrode, the negative electrode containing the above-described negative electrode mixture is used.

In the following, the nonaqueous electrolyte secondary battery is described in detail.

### (Negative Electrode)

The negative electrode may include a negative electrode current collector and a negative electrode mixture layer supported on the surface of the negative electrode current collector. The negative electrode mixture layer can be formed, for example, by applying a negative electrode slurry in which the negative electrode mixture is dispersed in a dispersion medium on a surface of a negative electrode current collector and drying the slurry. The dried coating film may be rolled, if necessary. The negative electrode mixture layer may be formed on one surface of the negative electrode current collector, or on both surfaces thereof.

The negative electrode mixture contains the negative electrode active material, CNT, and acrylic resin as essential components. The negative electrode mixture can contain, as optional components, a conductive agent other than the CNT, and a binder other than the acrylic resin.

The conductive agent other than the CNT can be, for example, carbon such as acetylene black, and metals such as aluminum. A kind of conductive agent may be used singly, or two or more kinds thereof may be used in combination.

Examples of the binder other than the acrylic resin include a resin material other than the acrylic resin. Examples of the resin material include fluorine resins, such as polytetrafluoroethylene and polyvinylidene fluoride (PVDF); polyolefin resins, such as polyethylene and polypropylene; polyamide resins, such as aramid resins; polyimide resins, such as polyimide and polyamide-imide. For the binder, rubber materials, such as styrene-butadiene copolymer rubber (SBR), and the like can also be used.

Examples of the binder also include carboxy methylcellulose (CMC) and a modified product thereof (also including salts such as Na salts), a cellulose derivative such as methylcellulose (such as cellulose ether). A kind of binder may be used singly, or two or more kinds thereof may be used in combination.

The dispersion medium is not particularly limited, and examples thereof include water, an alcohol such as ethanol, ether such as tetrahydrofuran, an amide such as dimethylformamide, N-methyl-2-pyrrolidone (NMP), or a mixture solvent thereof.

As the negative electrode current collector, a non-porous conductive substrate (metal foil, etc.), and a porous conductive substrate (mesh-body, net-body, punched sheet, etc.) are used. For the material of the negative electrode current collector, stainless steel, nickel, nickel alloy, copper, copper alloy or the like can be exemplified. The thickness of the negative electrode current collector is not particularly limited, and can be 1 to 50 µm, or 5 to 20 µm.

### (Positive Electrode)

The positive electrode may include a positive electrode current collector, and a positive electrode mixture layer supported on a surface of the positive electrode current collector. The positive electrode mixture layer can be formed by applying a positive electrode slurry in which the positive electrode mixture is dispersed in a dispersion medium such as NMP on a surface of the positive electrode current collector, and drying the slurry. The dried coating film may be rolled, if necessary. The positive electrode mixture layer may be formed on one surface of the positive electrode current collector, or may be formed on both surfaces thereof. The positive electrode mixture contains the positive electrode active material as an essential component, and may contain a binder and a conductive agent as optional components.

As the positive electrode active material, for example, a composite oxide containing lithium and a transition metal is used. Examples of the transition metal include Ni, Co, and Mn. Examples of the composite oxide containing lithium and a transition metal include LiₐCoO₂, LiₐNiO₂, LiₐMnO₂, LiₐCo_{b}Ni_{1-b}O₂, LiₐCo_{b}M_{1-b}O_{c}, LiₐNi_{1-b}M_{b}O_{c}, LiₐMn₂O_{4,} and LiₐMn_{2-b}M_{b}O₄. Here, a = 0 to 1.2, b = 0 to 0.9, and c = 2.0 to 2.3. M is at least one selected from the group consisting of Na, Mg, Sc, Y, Mn, Fe, Co, Ni, Cu, Zn, Al, Cr, Pb, Sb, and B. Note that the value "a" indicating the molar ratio of lithium is increased or decreased by charging and discharging.

In particular, lithium nickel composite oxide represented by LiₐNi_{b}M_{1-b}O₂ (0 < a ≤ 1.2, 0.3 ≤ b ≤ 1, M is at least one selected from the group consisting of Mn, Co, and Al) is preferable. In view of increasing the capacity, it is more preferable to satisfy 0.85 ≤ b ≤ 1. In view of stability of the crystal structure, LiₐNi_{b}Co_{c}Al_{d}O₂ (0 < a ≤ 1.2, 0.85 ≤ b < 1, 0 < c ≤ 0.15, 0 < d ≤ 0.1, b + c + d = 1) is more preferable.

Examples of the binder include the resin material given as examples for the negative electrode. Examples of the conductive agent include those exemplified for the negative electrode. As the conductive agent, graphite such as natural graphite or artificial graphite may be used.

The shape and thickness of the positive electrode current collector can be selected from the shapes and ranges according to the negative electrode current collector. Examples of the material for the positive electrode current collector include stainless steel, aluminum, aluminum alloy, titanium or the like.

### (Nonaqueous Electrolyte)

The nonaqueous electrolyte contains a nonaqueous solvent, and a lithium salt dissolved in the nonaqueous solvent. Preferably, the lithium salt concentration of the nonaqueous electrolyte is, for example, 0.5 mol/L or more and 2 mol/L or less. With the lithium salt concentration within the above-described range, a nonaqueous electrolyte having an excellent ion conductivity and a suitable viscosity can be produced. However, the lithium salt concentration is not limited to the above-described concentration.

As the nonaqueous solvent, for example, a cyclic carbonic acid ester, a chain carbonic acid ester, a cyclic carboxylic acid ester, a chain carboxylic acid ester, or the like is used. Examples of the cyclic carbonic acid ester include propylene carbonate (PC), ethylene carbonate (EC), and the like. Examples of the chain carbonic acid ester include diethyl carbonate (DEC), ethyl methyl carbonate (EMC), dimethyl carbonate (DMC), and the like. Examples of the cyclic carboxylic acid ester include γ-butyrolactone (GBL) and γ-valerolactone (GVL). Examples of the chain carboxylic acid ester include methyl formate, ethyl formate, propyl formate, methyl acetate, ethyl acetate, propyl acetate, methyl propionate, ethyl propionate, and propyl propionate. A kind of nonaqueous solvent may be used singly, or two or more kinds thereof may be used in combination.

Examples of the lithium salt include LiClO₄, LiBF₄, LiPF₆, LiAlCl₄, LiSbF₆, LiSCN, LiCF₃SO₃, LiCF₃CO₂, LiAsF₆, LiB₁₀Cl₁₀, lithium lower aliphatic carboxylates, LiCl, LiBr, Lil, borates, and imide salts. Examples of the borates include bis(1,2-benzenediolate (2-)-O,O') lithium borate, bis(2,3-naphthalenediolate (2-)-O,O') lithium borate, bis(2,2'-biphenyldiolate (2-)-O,O') lithium borate, and bis(5-fluoro-2-olate-1-benzenesulfonic acid-O,O') lithium borate. Examples of the imide salts include bisfluorosulfonyl imide lithium (LiN(FSO₂)₂), bistrifluoromethane sulfonate imide lithium (LiN(CF₃SO₂)₂), trifluoromethane sulfonate nonafluorobutane sulfonate imide lithium (LiN(CF₃SO₂)(C₄F₉SO₂)), bispentafluoroethane sulphonate imide lithium (LiN(C₂F₅SO₂)₂) and the like. A kind of lithium salt may be used singly, or two or more kinds thereof may be used in combination.

### (Separator)

Usually, it is desirable to interpose a separator between the positive electrode and the negative electrode. The separator has excellent ion permeability and suitable mechanical strength and electrically insulating properties. The separator may be, for example, a microporous thin film, a woven fabric, or a nonwoven fabric. The separator is preferably made of, for example, polyolefin such as polypropylene and polyethylene.

In an example structure of the nonaqueous electrolyte secondary battery, an electrode group and a nonaqueous electrolyte are accommodated in an outer package, the electrode group having a positive electrode and a negative electrode wound with a separator. Alternatively, instead of the wound-type electrode group, other forms of electrode groups may be applied, such as a laminated electrode group in which the positive electrode and the negative electrode are laminated with a separator interposed therebetween. The nonaqueous electrolyte secondary battery may be any shape of, for example, a cylindrical shape, a rectangular shape, a coin-shape, a button shape, or a laminate shape.

In the following, a structure of a rectangular nonaqueous electrolyte secondary battery is described as an example of the nonaqueous electrolyte secondary battery of the present disclosure with reference to FIG. 1. FIG. 1 is a schematic oblique cutaway view of a nonaqueous electrolyte secondary battery of an embodiment of the present disclosure.

The battery includes a bottomed rectangular battery case 4, and an electrode group 1 and a nonaqueous electrolyte accommodated in the battery case 4. The electrode group 1 has a negative electrode in the form of a long strip, a positive electrode in the form of a long strip, and a separator interposed therebetween for preventing direct contact therebetween. The electrode group 1 is formed by winding the negative electrode, the positive electrode, and the separator around a flat core and removing the core.

One end of the negative electrode lead 3 is attached to the negative electrode current collector of the negative electrode by welding or the like. The other end of the negative electrode lead 3 is electrically connected to the negative electrode terminal 6 provided in a sealing plate 5 with a resin-made insulating plate. The negative electrode terminal 6 is insulated from the sealing plate 5 by a resin gasket 7. One end of the positive electrode lead 2 is attached to the positive electrode current collector of the positive electrode by welding or the like. The other end of the positive electrode lead 2 is connected to the back surface of the sealing plate 5 via an insulating plate. That is, the positive electrode lead 2 is electrically connected to the battery case 4 which also serves as the positive electrode terminal. The insulating plate separates the electrode group 1 and the sealing plate 5 and separates the negative electrode lead 3 and the battery case 4. Periphery of the sealing plate 5 is fitted to the open end of the battery case 4, and the fitting portion is laser welded. In this manner, the opening of the battery case 4 is sealed by the sealing plate 5. The injection hole for the electrolyte provided in the sealing plate 5 is plugged with a sealing plug 8.

In the following, Examples of the present disclosure will be described in detail. The present invention, however, is not limited to the following examples.

### <<Examples 1 to 9>>

### [Negative Electrode Production]

A suitable amount of water was added to a negative electrode mixture, and stirred, thereby producing a negative electrode slurry. For the negative electrode mixture, a mixture of a negative electrode active material, a binder, and a conductive agent was used.

For the negative electrode active material, a mixture of a Si-containing material and graphite (average particle size (D50): 25 µm) was used. In the negative electrode active material, a mass ratio of the Si-containing material to graphite was 10:90. For the Si-containing material, SiOₓ particles (x = 1, average particle size (D50): 5 µm) with its surface covered with a conductive layer containing an electrically conductive carbon were used. The amount covered with the conductive layer was 5 parts by mass per 100 parts by mass of the SiOₓ particles and the conductive layer in total.

For the binder, acrylic resin, carboxymethyl cellulose sodium (CMC-Na), and styrene-butadiene rubber (SBR) were used. Lithium polyacrylate (PAA-Li) was used for the acrylic resin. For the conductive agent, a CNT containing 90% or more of SWCNT (diameter: 1.2 to 2.0 nm, average diameter: about 1.6 nm, average length: about 5 µm) was used.

The CNT content and the acrylic resin content (mass ratio to the negative electrode active material as a whole) in the negative electrode mixture were set to the values shown in Table 1. The CMC-Na content in the negative electrode mixture was set to 1 mass% relative to the negative electrode active material as a whole. The SBR content in the negative electrode mixture was set to 1 mass% relative to the negative electrode active material as a whole.

Next, a negative electrode slurry was applied to a surface of copper foil, dried and then rolled to form a negative electrode mixture layer (thickness: 80 µm, density: 1.6 g/cm³) on both sides of the copper foil, thereby producing a negative electrode.

### [Positive Electrode Production]

To 95 parts by mass of lithium-containing composite oxide (LiNi_{0.8}Co_{0.18}Al_{0.02}O₂), 2.5 parts by mass of acetylene black, 2.5 parts by mass of polyvinylidene fluoride, and a suitable amount of N-methyl-2-pyrrolidone (NMP) were added, and the mixture was stirred, thereby producing a positive electrode slurry. Next, the positive electrode slurry was applied to a surface of aluminum foil, dried and then rolled to form a positive electrode mixture layer (thickness: 95 µm, density: 3.6 g/cm³) on both surfaces of aluminum foil, thereby producing a positive electrode.

### [Nonaqueous electrolyte Preparation]

To a solvent mixture (volume ratio 3:7) of ethylene carbonate (EC) and dimethyl carbonate (DMC), LiPF₆ was dissolved with a concentration of 1.0 mol/L, thereby producing a nonaqueous electrolyte.

### [Nonaqueous electrolyte secondary battery Production]

An Al-made positive electrode lead was attached to the above-described positive electrode, and a Ni-made negative electrode lead was attached to the above-described negative electrode. The positive electrode and the negative electrode were wound with a polyethylene thin film (separator) interposed therebetween into a spiral shape in an inert gas atmosphere, thereby producing a wound-type electrode group. The electrode group was accommodated in a bag-type outer package formed with a laminate sheet including an Al layer, the above-described nonaqueous electrolyte was injected, and then the outer package was sealed, thereby producing a nonaqueous electrolyte secondary battery. Upon accommodating the electrode group in the outer package, a portion of the positive electrode lead and a portion of the negative electrode lead were allowed to be exposed to the outside of the outer package. In Table 1, the nonaqueous electrolyte secondary batteries of Examples 1 to 9 are A1 to A9.

### «Example 10»

A CNT (average diameter: about 5 nm) containing 50% of SWCNT was used for the conductive agent. The CNT content and the acrylic resin content in the negative electrode mixture (mass ratio to the negative electrode active material as a whole) were set to the values shown in Table 1. A battery A10 of Example 10 was produced in the same manner as the battery A1 of Example 1, except for the above.

### «Comparative Example 1»

In the production of the negative electrode, acrylic resin was not added to the negative electrode mixture. The CNT content in the negative electrode mixture relative to the negative electrode active material as a whole was set to 0.12 mass%. Except for the above, a battery B1 of Comparative Example 1 was produced in the same manner as the battery A1 of Example 1.

### «Comparative Example 2»

In the production of the negative electrode, CNT was not added to the negative electrode mixture. The acrylic resin content in the negative electrode mixture relative to the negative electrode active material as a whole was set to 1 mass%. Except for the above, a battery B2 of Comparative Example 2 was produced in the same manner as the battery A1 of Example 1.

### «Comparative Example 3»

A battery B3 of Comparative Example 3 was produced in the same manner as the battery A1 of Example 1, except that in the production of the negative electrode, CNT or acrylic resin was not added to the negative electrode mixture.

### «Comparative Example 4»

A CNT (average diameter: about 9 nm) containing 100% of MWCNT was used for the conductive agent. The CNT content and the acrylic resin content in the negative electrode mixture (mass ratio to the negative electrode active material as a whole) were set to the value shown in Table 1. Except for the above, a battery B4 of Comparative Example 4 was produced in the same manner as the battery A1 of Example 1.

### «Comparative Example 5»

A battery B5 of Comparative Example 5 was produced in the same manner as in the battery A5 of Example 5, except that in the production of the negative electrode, acrylic resin was not added to the negative electrode mixture.

The above-described batteries were evaluated as below.

### [Charge and Discharge Cycle Test]

### (Charge)

The batteries were subjected to constant current charging at a current of 0.5 C (180 mA) until the voltage reached 4.2 V, then to constant voltage charging at a constant voltage of 4.2 V until the current reached 0.05 C (18 mA).

### (Discharge)

The batteries were subjected to constant current discharging at a current of 0.7 C (252 mA) until the voltage reached 2.5 V.

The batteries were allowed to rest for 10 minutes between the charging and discharging. The charge/discharge were conducted under an environment of 25°C.

The charge/discharge were repeated under the above-described conditions. The ratio (percentage) of the discharge capacity at the 100th cycle to the discharge capacity at the 1st cycle was determined as a capacity retention rate. The evaluation results are shown in Table 1.

**[Table 1]**

| | Battery | Negative Electrode Mixture | | | | Evaluation | |
|---|---|---|---|---|---|---|---|
| | | CNT Average Diameter (nm) | CNT Content (mass%) | Acrylic Resin Content (mass%) | Mass ratio (Acrylic Resin /CNT) | 100th Cycle Capacity retention (%) | Initial capacity (Negative Electrode capacity) (Index) |
| Ex. 1 | A1 | 1.6 | 0.003 | 1.5 | 500 | 95.2 | - |
| Ex. 2 | A2 | 1.6 | 0.004 | 0.9 | 225 | 95.6 | - |
| Ex. 3 | A3 | 1.6 | 0.005 | 0.5 | 100 | 96.0 | - |
| Ex. 4 | A4 | 1.6 | 0.01 | 0.5 | 50 | 96.0 | - |
| Ex. 5 | A5 | 1.6 | 0.02 | 0.4 | 20 | 96.0 | 100 |
| Ex. 6 | A6 | 1.6 | 0.03 | 0.2 | 7 | 95.8 | - |
| Ex. 7 | A7 | 1.6 | 0.05 | 0.1 | 2 | 95.8 | - |
| Ex. 8 | A8 | 1.6 | 0.08 | 0.05 | 0.6 | 95.6 | - |
| Ex. 9 | A9 | 1.6 | 0.1 | 0.02 | 0.2 | 95.4 | - |
| Ex. 10 | A10 | 5 | 0.3 | 0.4 | 1.3 | 95.2 | - |
| Comp . Ex.1 | B1 | 1.6 | 0.12 | 0 | 0 | 95.0 | 99.9 |
| Comp . Ex.2 | B2 | - | 0 | 1 | - | 93.2 | 99.8 |
| Comp . Ex.3 | B3 | - | 0 | 0 | - | 91.8 | - |
| Comp . Ex.4 | B4 | 9 | 0.3 | 0.4 | 1.3 | 89.0 | - |
| Comp . Ex.5 | B5 | 1.6 | 0.02 | 0 | 0 | 94.0 | - |

The batteries A1 to A10 achieved a high capacity retention rate compared with the batteries B1 to B5. The batteries B1 and B5 had a low capacity retention rate because acrylic resin was not added to the negative electrode mixture. The battery B2 had a low capacity retention rate because CNT was not added to the negative electrode mixture. The battery B3 had a low capacity retention rate because CNT or acrylic resin was not added to the negative electrode mixture. The battery B4 had a low capacity retention rate because the negative electrode mixture contained the CNT with a large average diameter of 9 nm. The battery A5 in which a small amount of CNT and acrylic resin were used achieved a high capacity retention rate compared with the battery B5 in which a small amount of CNT and no acrylic resin was used.

Furthermore, the initial capacity was determined as follows for the negative electrodes produced in Example 5 and Comparative Examples 1 to 2.

Evaluation cells were made with the negative electrode produced as described above, a Li electrode as a counter electrode, and the above-described nonaqueous electrolyte. Constant current charging was performed at a current of 0.01 C until 5 mV (vs. Li/Li⁺). Afterwards, constant current discharging was performed at a current of 0.1 C until 1 V (vs. Li/Li⁺). The discharge capacity of the negative electrode at this time was determined as the initial capacity. The initial capacity is shown as an index, setting the initial capacity of the negative electrode of Example 5 as 100.

The negative electrode of Example 5 achieved a high initial capacity compared with the negative electrodes of Comparative Examples 1 to 2. The negative electrode of Comparative Example 1 had an improved electrical conductivity with the addition of CNT, but the amount of the CNT added was large, and the amount of the active material decreased to that extent, and therefore the initial capacity was lower than that of the negative electrode of Example 5. The negative electrode of Comparative Example 2 had a large amount of acrylic resin added, and did not contain CNT, and therefore had a high resistance, and the initial capacity was lower than that of the negative electrode of Example 5.

### [Industrial Applicability]

The nonaqueous electrolyte secondary battery according to the present disclosure is useful for a main power source of a mobile communication device, a portable electronic device, or the like.

### [Reference Signs List]

1 Electrode group
2 Positive electrode lead
3 Negative electrode lead
4 Battery case
5 Sealing plate
6 Negative electrode terminal
7 Gasket
8 Sealing plug

## Claims

1. A negative electrode for a nonaqueous electrolyte secondary battery comprising a negative electrode mixture including a negative electrode active material capable of electrochemically storing and releasing lithium ions, a carbon nanotube, and an acrylic resin, wherein
the negative electrode active material includes a silicon-containing material, and
the carbon nanotube has an average diameter of 5 nm or less.

2. The negative electrode for a nonaqueous electrolyte secondary battery of claim 1, wherein in the negative electrode mixture, a mass ratio of the acrylic resin to the carbon nanotube is 0.2 or more and 500 or less.

3. The negative electrode for a nonaqueous electrolyte secondary battery of claim 1, wherein in the negative electrode mixture, a mass ratio of the acrylic resin to the carbon nanotube is 20 or more and 100 or less.

4. The negative electrode for a nonaqueous electrolyte secondary battery of any one of claims 1 to 3, wherein in the negative electrode mixture, a carbon nanotube content relative to the negative electrode active material as a whole is 0.001 mass% or more and 0.05 mass% or less.

5. The negative electrode for a nonaqueous electrolyte secondary battery of any one of claims 1 to 4, wherein in the negative electrode mixture, an acrylic resin content relative to the negative electrode active material as a whole is 0.1 mass% or more and 1 mass% or less.

6. The negative electrode for a nonaqueous electrolyte secondary battery of any one of claims 1 to 5, wherein the carbon nanotube has an average diameter of 1 nm or more and 3 nm or less.

7. The negative electrode for a nonaqueous electrolyte secondary battery of any one of claims 1 to 6, wherein the carbon nanotube includes a single-wall carbon nanotube.

8. The negative electrode for a nonaqueous electrolyte secondary battery of any one of claims 1 to 7, wherein the silicon-containing material includes a composite material including a lithium ion conductive phase and silicon particles dispersed in the lithium ion conductive phase.

9. The negative electrode for a nonaqueous electrolyte secondary battery of claim 8, wherein
the lithium ion conductive phase includes at least one selected from the group consisting of a SiO₂ phase, a silicate phase, and
a carbon phase, and the silicate phase includes at least one selected from the group consisting of an alkali metal element and a Group 2 element.

10. A nonaqueous electrolyte secondary battery comprising a positive electrode, a negative electrode, and a nonaqueous electrolyte, wherein
the negative electrode is the negative electrode of any one of claims 1 to 9.
